# EUROPÄISCHE PATENTSCHRIFT

(11) **EP 0 520 272 B1**
(45) Veröffentlichungstag und Bekanntmachung des Hinweises auf die Patenterteilung: **09.08.1995**
(21) Anmeldenummer: 92110038.4
(22) Anmeldetag: 15.06.1992
(51) Int. Cl.: C08G 64/28, C08G 64/06, C08G 64/24, C08G 64/14

(54) **Kontinuierliche Herstellung von Polycarbonaten**
Continuous preparation of polycarbonates
Préparation de polycarbonates en continue

(30) Priorität: 27.06.1991 DE 4121213
(43) Veröffentlichungstag der Anmeldung: 30.12.1992
(73) Patentinhaber: BAYER AG, 51368 Leverkusen (DE)
(72) Erfinder: Wulff, Claus, Dr., W-4150 Krefeld (DE); Freitag, Dieter, Dr., W-4150 Krefeld (DE); Kauth, Hermann, Dr., W-4150 Krefeld 11 (DE); Weymans, Günther, Dr., W-5090 Leverkusen (DE); Alewelt, Wolfgang, Dr., W-4150 Krefeld 12 (DE); Schomäcker, Reinhard, Dr., W-5090 Leverkusen 3 (DE)

(56) Entgegenhaltungen:
- EP-A- 0 304 691
- EP-A- 0 306 838
- DE-A- 2 725 967
- US-A- 3 674 740
- US-A- 5 037 941
- US-A- 5 043 203
- SCHNELL, H. 'Chemistry and Physics of Polycarbonates' 1964, INTERSCIENCE PUBLISHERS, NEW YORK

## Beschreibung

Kontinuierliche Verfahren zur Herstellung von Kondensaten unter Verwendung von Phosgen - beispielsweise die Herstellung von aromatischen Polycarbonaten, oder Polyestercarbonaten oder ihrer Oligomeren - nach dem Zweiphasen-Grenzflächenverfahren haben in der Regel den Nachteil, daß zur Beschleunigung der Reaktion und/oder zur Verbesserung der Phasentrennung mehr Phosgen eingesetzt werden muß als für die Produktbilanz notwendig ist. Der Phosgen-Überschuß wird dann in der Synthese in Form von Nebenprodukten - beispielsweise zusätzliches Kochsalz oder Alkalicarbonat-Verbindungen - abgebaut.

Beispielsweise werden für das kontinuierliche Zweiphasen-Grenzflächen-Verfahren zur Herstellung von aromatischen Polycarbonaten nach dem Stand der Technik ein Phosgenüberschuß - bezogen auf das eingesetzte Diphenolat - von 20 bis 60 Mol-% eingesetzt.

So beschreibt die DE-A-2 305 144 ein Verfahren zur kontinuierlichen Herstellung von Polycarbonaten, in dem die beiden reaktiven Phasen in Gegenwart von Aminen in einer Mischzone bei im wesentlichen öl-in-Wasser-Emulsionsverhaltnissen zusammengebracht und die Phosgenierung in einer Reaktionsstrecke nach Vermischen abläuft. Spezielle strömungstechnische Anordnungen sollen dafür sorgen, daß die Raum-Zeit-Ausbeute der Reaktion gesteigert wird. Nachteilig ist die große Menge wäßriger Phase, die Phosgen-Nebenreaktionen unterstützt.

Nach der DE-A-2 353 939 sollen die Eigenschaften eines Polycarbonats, hergestellt nach dem Zweiphsengrenzflächenverfahren, durch Steuerung der Reaktion mit einer pH-Wert-Regelung verbessert werden können. Nachteilig ist der dabei eingesetzte Phosgenüberschuß. Das Verfahren ist außerdem nicht-kontinuierlich.

Nach der Lehre der EP-A-0 282 546 sollen Kondensate mit Chlorformyl-Endgruppen mit guter Phosgenausbeute dadurch nach dem Zweiphasengrenzflächen-Verfahren hergestellt werden können, daß man in eine vorgelegte organische Phase gleichzeitig eine stabile Diphenol-Wasser-Natronlauge-Suspension und Phosgen kontinuierlich einmischt und das Reäktionsprodukt anschließend isoliert Wahrend der Reaktion werden pH-Werte zwischen 2 und 5 eingestellt. Nachteilig sind technische Schwierigkeiten bei der Dosierung der Suspension und der geringe pH-Wert, der die Phosgenierungszeit erheblich erhöht.

Aus der EP-A-0 263 432 ist zu erfahren, daß Kondensate mit Chlorformyl-Endgruppen oder Polycarbonate aus wäßriger Diphenolatlösung und organischer Lösung dadurch hergestellt werden können, daß man bei pH-Werten zwischen 8 und 11, Temperaturen zwischen 15° und 50°C und einem Phosgenüberschuß von mindestens 10 Mol-% Phosgen in eine heterogene Mischung einmischt und die Phosgenierung unter gleichzeitigem Nachdosieren von Alkali- oder Erdalkalilaugen fortführt.

Aus der DE-A-2 725 967 geht die Lehre bevor, daß es für die Phosgenausbeute eines kontinuierlichen Verfahrens günstig ist, wäßrige und organische Phase, die Phosgen gelöst enthält, zunächst in einem Rohr zusammenzuführen und dann in einen Reaktor vom Tanktyp einzuführen. Die Verweilzeit in diesem Rohr sollte zwischen 0,5 und 15 Sekunden betragen. Der Phosgenüberschuß der Reaktion beträgt mindestens 10 Mol-%. Nachteilig ist der immer noch recht hohe Phosgenüberschuß. Außerdem hat das Verfahren den Nachteil, daß die Phosgenierung bei ungünstigen Phasenverhältnissen (Öl zu Wasser = 0,2 bis 1) stattfindet, damit die Trennung der beiden Phasen nach Abschluß der Reaktion sicher möglich ist.

Nach der EP-A-0 306 838 A2 wird die Phosgenierung unter Verwendung eines automatischen C1-Detektors in-situ überwacht. Durch diese Prozeßführung werden Schwankungen im Chemismus der Reaktion unterdrückt und die technischen Eigenschaften der Polycarbonate angeblich deutlich verbessert. Der Grundgedanke des Verfahrens besteht darin, nicht abreagiertes Diphenolat in den Prozeß zurückzuführen. Nachteilig sind allerdings die Phosgen-Nebenreaktionen, die sich auch in dieser Rückführungsmaßnahme äußern.

Nach der EP-A-0 339 503-A2 ist bekannt, daß die Phosgen-Nebenreaktionen insbesondere dadurch erhöht werden, daß eine hohe Natronlauge-Anfangskonzentration vorliegt. In dieser Patentschrift wird daher die Diphenol-Natroniauge-Wasser-Losung im Alkal-Hydroxy-Verhältnis von unter 2:1 (Alkalilauge-Unterschuß) mit der organischen Phase zusammengeführt, wobei sich in dieser ersten Reaktonsstufe Oligomere mit Molekulargewicht zwischen 300 und 3 000 g/mol bilden. Die Phasenverhältnisse Wasser zu Öl sind größer als 1. Außerdem sind die Phosgen-Nebenreaktionen immer noch recht ungünstig.

Aus der EP-A-0 304 691 A2 geht hervor, daß - allerdings bei einem sehr hohen Phosgenüberschuß (20 bis 100 Mol-% Überschuß) - im Zweiphasengrenzflächen-Verfahren eine feine Emulsion - erzielt durch hohe Mischleistung - für den Reaktionsverlauf günstig ist. Der hohe Phosgeneinsatz bewirkt eine gute Phasentrennung trotz intensiver Vermischung der Emulsion zu Beginn der Reaktion. Die Phosgenausbeute ist allerdings recht ungünstig.

Es bleibt also festzuhalten, daß die Herstellung von Kondensaten oder Polykondensaten nach dem Zweiphasengrenzflächenverfahren bisher kontinuierlich entweder nur mit hohem Phosgenüberschuß oder in ungünstigen Phasenverhältnissen (Wassereinsatz) oder mit Phasentrennproblemen möglich war.

Die nicht vorveröffentlichte US-A-5 043 203 beschreibt ein anderes Polycarbonatherstellungsverfahren, wobei zu Beginn der Reaktion alles Diphenol eingesetzt und der Zusatz von Phosgen und Alkali sukzessive erfolgte. Entsprechendes gilt für die äquivalente EP-A-456 052.

Es wurde nun gefunden, daß gute Phasentrennung und verbesserte Phosgenausbeute bei der kontinuierlichen Herstellung von Polycarbonaten nach dem Zweiphasen-Grenzflächenverfahren durch das anspruchs gemäße Verfahren erreicht werden.

Gegenstand der vorliegenden Erfindung ist somit ein Verfahren zur kontinuierlichen Herstellung von Polycarbonaten mit M̅_{w} von 15 000 bis 200 000 g/Mol nach der Methode des Zweiphasengrenzflächenverfahrens aus
a) Diphenolen,
b) Phosgen,
c) Katalysatoren
d) gegebenenfalls Kettenabbrechern und gegebenenfalls
e) Verzweigern,
in einem Gemisch aus wäßrig-alkalischer Phase und organischer Lösungsmittelphase, in dem man
1. kontinuierlich die organische Phase und die wäßrige Phase in einem Rohr unter Verwendung eines Mischers zusammenführt,
   1.1 wobei die organische Phase ein für das Polycabronat geeignetes Lösungsmittel, beispielsweise CH₂Cl₂, Chlorbenzol oder ein Gemisch der beiden untereinander ist und bereits das Phosgen enthält,
   1.2 wobei die wäßrige Phase aus Wasser und einem Gemisch von Alkalilauge und phenolischen Komponenten besteht, wobei zwischen 15 Mol und 2,1 Mol Alkalilauge pro Mol Diphenol zugesetzt wird,
   1.3 wobei die Phasenverhältnisse organische Phase/wäßrige Phase so eingestellt sind, daß sich bei der Phosgenreaktion eine Wasser-in-Öl-Emulsion im Verhältnis (Volumenprozent) organische Phase zu wäßriger Phase zwischen 0,50 : 0,50 und 0,70 : 0,30 bildet, wobei insbesondere der Phosgenüberschuß, bezogen auf Mole Diphenol der Stufe 1, mindestens 20 Mol-%, bevorzugt mehr als 25 Mol-% beträgt,
2. die Verweilzeit mindestens 3 Sekunden, vorzugsweise von 5 Sekunden bis zu 40 Sekunden, im Strömungsrohr ist, wobei gegebenenfalls am Ende des Strömungsrohrs Alkalilauge nachdosiert wird,
3. anschließend eine Nachdosierung von wäßriger Phase, bestehend aus phenolischen Komponenten, Wasser und Alkalilauge, in solchen Mengen und derart erfolgt, daß die Diphenol-Konzentration der wäßrigen Phase, Dosierkapazität und Dosieranordnung die folgenden Randbedingungen erfüllen, nämlich
   a) den ursprünglich kalkulierten Phosgenüberschuß, bezogen auf Mole insgesamt eingesetzte Diphenole (Maßnahme 1 + Maßnahme 3), auf weniger als 15 Mol-%, vorzugsweise auf 6 bis 10 Mol-% reduziert,
   b) die zunächst Wasser-in-Öl-Emulsion in eine Öl-in-Wasser-Emulsion im Verhältnis (Volumenprozent) organische Phase zu wäßriger Phase zwischen 0,45 : 0,55 und 0,48 : 0,52 umschlägt und
   c) die Diphenol-Nachdosierung innerhalb eines Zeitraums erfolgt, der zwischen sofort nach der Verweilzeit im Strömungsrohr von Verfahrensschritt 2 und bis zu 20 Minuten nach Beginn der Phosgenierung liegt,
4. nach im wesentlichen vollständiger Abreaktion des nachdosierten Diphenols Katalysatoren, wie beispielsweise tertiäre Amine, zudosiert und
5. danach, gegebenenfalls nach einer weiteren Verweilzeit von bis zu 20 Minuten, die organische Phase abtrennt und in bekannter Weise wäscht und aufarbeitet
Geeignete Diphenole für das erfindungsgemäße Verfahren sind Diphenole der Formel HO-Z-OH, in denen Z ein aromatischer Rest mit 6 bis 30 C-Atomen ist, der einen oder mehrere aromatische Kerne enthalten kann, substituiert sein kann und aliphatische Reste oder cycloaliphatische Reste oder Heteroatome als Brückenglieder enthalten kann. Beispiele sind
Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfone
Bis-(hydroxyphenyl)-sulfoxide
α,α-Bis-(hydroxyphenyl)-diisopropylbenzole sowie deren kernalkylierte und kernhalogenierte Verbindungen.

Diese und weitere geeignete andere Diphenole sind z.B. in den US-A-3 028 365, 2 999 835, 3 148 172, 3275 601, 2 991 273, 3 271 367, 3 062 781, 2 970 131 und 2 999 846, in den DE-A-1 570 703, 2 063 050, 2 063 052, 2 211 956, der FR-A-1 561 518 und in der DE-A-3 833 953 beschrieben. Bevorzugte Diphenole sind insbesondere 2,2-Bis-(4-hydroxyphenyl)-propan, 2,2-Bis-(3,5-dimethyl-4-hydroxyphenyl)-propan, 1,1-Bis-(4-hydroxyphenyl)-cyclohexan, 1,1-Bis-(4-hydroxyphenyl)-3,3,5-trimethyl-cyclohexan. Es sei hier betont, daß das erfindungsgemäße Verfahren praktisch für alle bekannten Diphenole eingesetzt werden kann, die sich in Anwesenheit von Alkalilauge und Wasser in einer wäßrigen Phase lösen.

Den Diphenolen kann entweder vor, während oder nach der Phosgenierung die bekannten Mengen und Arten von Kettenabbrechern oder Verzweigern zugeführt werden.

Geeignete Kettenabbrecher und Verzweiger sind literaturbekannt (siehe beispielsweise DE-A-3 833 953). Bevorzugte Kettenabbrecher sind Phenol, Cumylphenol, Isooctylphenol, para-tert.-Butylphenol. Bevorzugte Verzweiger sind Trisphenole und Tetraphenole sowie 3,3-Bis-(3-methyl-4-hydroxyphenyl)-2-oxo-2,3-dihydroindol.

Als Alkalilauge werden Natronlauge oder Kalilauge eingesetzt. Gegebenenfalls können auch Erdalkalilaugen eingesetzt werden.

Die organische Phase enthält wie bereits erwähnt im wesentlichen ein das Polycarbonat bei den Reaktionstemperaturen und Reaktionsdrücken lösendes - mit Wasser im wesentlichen nicht mischbares - Medium wie z.B. Methylenchlorid oder Mono-Chlorbenzol. Bevorzugtes Medium ist im wesentlichen reines Methylenchlorid oder ein Gemisch Methylenchlorid/Chlorbenzol. Die organische Phase enthält vor Zusammenbringen mit der wäßrige Phase bereits das Phosgen gelöst.

Die wäßrige Phase ist wie ebenfalls bereits erwähnt ein Gemisch aus Alkalilauge, Diphenol und Wasser und gegebenenfalls dem Kettenabbrecher und gegebenenfalls dem Verzweiger.

Die wäßrige und organische Phase werden unter Verwendung eines Mischers kontinuierlich in einem Rohr zusammengeführt Geeignete Mischer sind alle Konstruktionen, die zwei Substanzen in einem Rohr zusammenbringen. Dabei kommt es nicht notwendigerweise auf die Mischleistung dieser Vorrichtung an. So kommen also beispielsweise Rohrverzweigungen (T-Stücke, gegebenenfalls mit Verengungen) wie auch Mischorgane wie z.B. spezielle Düsen oder statische Mischer in Frage. Als Mischdüsen sind insbesondere geeignet Zweistoffdüsen mit einer Verweil- und Mischzeit von mindestens 20 Millisekunden wie z.B. Vollkegeldüsen, Hohlkegelexzenterdüsen, Axialkohlkegeldüsen und Pneumatik-Zerstäuberdüsen und Ringlochdüsen. Soweit Mischdüsen verwendet werden, sind bevorzugte Mischdüsen Ringlochdüsen. Geeignet sind als statische Mischer bevorzugt statische Mischer vom Typ BKM. Wie bereits betont, ist darauf zu achten, daß für das gewählte Mischorgan die Phasenverhältnisse so eingestellt werden, daß nach der Mischung - während der gesamten Phosgenierung - eine wasser-in-Öl-Emulsion vorliegt.

Im erfindungsgemäßen Verfahrensschritt 1 werden die Phasenverhältnisse (Volumen-Prozent) organische Phase zu wäßrige Phase zwischen 0,50:0,50 und 0,70:0,30 gewählt. Der Phosgenüberschuß - bezogen auf die Menge eingesetzter Diphenole von Stufe 1 - beträgt im allgemeinen zwischen 20 Mol-% und 90 Mol-%, bevorzugt zwischen 25 Mol-% und 60 Mol-%.

Abhängig von den gewählten Phasenverhältnissen und dem Phosgenüberschuß kann die Verweilzeit im Strömungsrohr mindestens 3 Sekunden, bevorzugt zwischen 5 und 40 Sekunden betragen. Die Verweilzeit wird bevorzugt so eingestellt, daß am Ende des Strömungsrohres kein Phosgen mehr nachweisbar ist. Während dieser Phosgenierung kann es sinnvoll sein, die Reaktionswärme durch ein - das Strömungsrohr umgebendes - Wärmetauschermedium abzuführen. Dabei sind unter Berücksichtigung der Verweilzeit praktisch alle Geometrien und Ausführungen denkbar, die für vorgegebene Kapazitäten diese Verweilzeit erreichen können.

Anschließend beginnt Verfahrensschritt 3, der apparativ im Prinzip in einem weiteren Strömungsrohr ablaufen kann. Ein solches Strömungsrohr ist in diesem Fall bevorzugt ein Strömungsrohr vom Typ Schlangenrohr - gegebenenfalls mit sich abwechselnden Misch- und Verweilzonen. Andere apparative Anordnungen für diesen Schritt sind alle bekannten Ausführungsformen von Apparaten mit oder ohne Rückvermischung, die als Gesamtanordnung eine Verweilzeit zwischen 3 und 20 Minuten breitstellen können. Geeignete Anordnungen sind daher z.B. Kolonnen, Reaktoren vom Tanktyp - unter Umständen mit Umpumpschleife -, gegebenenfalls mit Umpumpeinrichtung. Bevorzugte apparative Anordnungen sind Rührkessel, Rührkessel mit Umpumpschleife, geschlossene Rohrschleifen mit Umpumpeinrichtung (Umpumpreaktoren).

Die Menge an nachdosiertem Diphenol hängt ab vom gewählten Phosgenüberschuß in Verfahrensschritt 1. Es wird wenigstens soviel Diphenol nachdosiert, daß Phosgenüberschuß - bezogen auf die Gesamtmolmenge an eingesetztem Diphenol (aus Verfahrensschritt 1 und Verfahrensschritt 3) auf höchstens 15 Mol-%, bevorzugt auf 6 bis 10 Mol-% reduziert ist. Die Menge an nachdosiertem Wasser hängt ab von dem im Verfahrensschritt 1 gewählten Phasenverhältnis organische:wäßrige Phase. Es wird insgesamt wenigstens soviel Wasser nachdosiert, daß die Phasenverhältnisse am Ende der Nachdosierung zwischen 0,45:0,55 und 0,48:0,52 Öl-zu-Wasser-Verhältnis betragen (Zahlen als Volumen-Prozente).

Das Umschlagen der Wasser-in-Öl-Emulsion in eine Öl-in-Wasser-Emulsion kann z.B. durch eine Leitfähigkeitsmessung überprüft werden.

Die eingesetzten Apparate, in denen die Nachdosierung erfolgt, können gegebenenfalls die Inversion der Emulsion dadurch unterstützen, daß in diesen Apparaten bereits eine Öl-in-Wasser-Emulsion vorliegt, in welche die Wasser-in-Öl-Emulsion aus den Strömungsrohr einfließt. In diesem Fall sind bevorzugte apparative Anordnungen solche, in denen das Volumenverhältnis von zuströmender Wasser-in-Öl-Emulsion zu bereits vorliegender (rückvermischter) Öl-in-Wasser-Emulsion 1:2, oder weniger bevorzugt weniger als 1:5, insbesondere weniger als 1:10 beträgt. Beim Einsatz von Umpumpreaktoren werden die pro Zeiteinheit zuströmenden Wasser-in-Öl-Mengen mit den im Umpumpreaktor pro Zeiteinheit umgepumpten Öl-in-Wasser-Mengen im allgemeinen so gewählt, daß pro Zeiteinheit eine Wasser-in-Öl-Menge zu Öl-in-Wasser-Menge von weniger als 1:2, bevorzugt weniger als 1:5, insbesondere zwischen 1:6 und 1:20 zusammgengeführt wird. Der Übergang vom Strömungsrohr zum Umpumpreaktor kann diesen Fällen z.B. durch Ein T-Stück, gegebenenfalls aber auch einen anderen zusätzlichen Mischer erfolgen.

Neben der Vorschrift der Menge an nachzudosierendem Diphenol und der Menge an nachdosiertem Wasser kann - dem Fachmann bekannt - auch noch die Konzentration des eingesetzten Diphenols in der wäßrigen Lösung - entsprechend den gewünschten Produktionsbedingungen - optimiert werden. Die Konzentrationen an Diphenol in dem Alkalilauge - Wasser-Diphenol-System - bezogen auf das Gesamtgewicht dieses Systems - liegen bei den vorgegebenen Temperatur- und Druckbedingungen immer so, daß das Diphenol in der wäßrige Phase vollständig gelöst ist. Es kann von Vorteil sein, für die Vor- und Nachdosierung gleiche Diphenol-Konzentrationen, gegebenenfalls aber auch unterschiedliche Konzentrationen zu wählen. Es kann unter Umständen nützlich sein, die nach Ende der Reaktion abgetrennte wäßrige Phase wenigstens zum Teil zur Nachdosierung im Verfahrensschritt 3 oder zur Vordosierung zusammen mit zusätzlichem Diphenol zu verwenden. Es kann gegebenenfalls von Vorteil sein, die Nachdosierung von Bisphenol-Lösung auch in mehreren Stufen vorzunehmen.

Die Menge an Alkalilauge im Verfahrensschritt 1 beträgt zwischen 1,5 und 2,1 Mol pro Mol an eingesetztem Diphenol im Verfahrensschritt 1.

Die Nachdosierung an Alkalilauge hängt ab von dem jeweils erzielten pH-Wert während des Reaktionsverlaufs. Am Ende des Strömungsrohrs (Verfahrensschritt 2) ist die Alkalilauge-Nachdosierung nicht unbedingt erforderlich. Es kann hier aber nützlich zur Steuerung der Reaktion sein, in Abhängigkeit vom Phosgenüberschuß Alkalilauge nachzudosieren, um wie bereits erwähnt, am Ende des Strömungsrohres alles Phosgen abreagiert zu haben.

Die Nachdosierung und Menge eingestzter Alkalilauge im Verfahrensschritt 3, in dem entweder bereits ein Öl-in-Wasser-Emulsion vorliegt oder durch die Dosierung die Öl-in-Wasser-Emulsion aus der Wasser-in-Öl-Emulsion erzeugt wird, wird so durchgeführt, daß über den gesamten Zeitraum der Verweilzeit ab Verfahrensschritt 3, im allgemeinen pH-Werte zwischen 9 und 14 eingestellt werden. Es kann hierzu erforderlich sein, die Natronlauge mehrstufig nachzudosieren.

Im Verfahrensschritt 4 werden die bekannten Menge an bekannten Katalysatoren in im Prinzip bekannter Weise zur Öl-in-Wasser-Emulsion zugegeben. Wichtig ist, daß die Dosierung des Katalysators erst erfolgt, wenn das nachdosierte Diphenol im wesentlichen vollständig abreagiert ist. Es kann von Vorteil sein, den Katalysator intensiv in die vorliegende Emulsion - z.B. durch oben beschriebene Mischorgane - einzumischen. Dabei kann prinzipiell der Katalysator verdünnt in einer wäßrigen oder in einer organischen oder in einem Gemisch aus wäßriger und organischer Lösung zugegeben werden.

Während des gesamten Reaktionsablaufes ist es notwendig, die jeweilige Emulsion im wesentlichen zu erhalten. Dies kann apparativ durch den Einbau von Mischelementen, Rührern, Pumpen, Strömungsprofilen und Mischzonen in einer dem Fachmann bekannten Weise erreicht werden.

Die Abtrennung der organischen von der wäßrigen Phase im Verfahrensschritt 5 erfolgt in bekannter Weise, etwa in einem Trenngefäß oder einer Trennzentrifuge, in der Regel nach einer weiteren Verweilzeit von bis zu 20 Minuten.

Die Phasentrennung kann durch den Restwassergehalt nach Trennung beurteilt werden. Eine gute Phasentrennung liegt vor, wenn der Restwassergehalt kleiner als 1 Gew.-% - bezogen auf die Gesamtmenge organische Phase und Restwassergehalt - liegt.

Der Grad der Umsetzung kann durch Restgehalt an Diphenol in der abgetrennten wäßrigen Phase im Verfahrensschritt 5 ("Mutterlauge") charakterisiert werden. Eine gute Umsetzung liegt vor, wenn der Gehalt an Diphenol in der wäßrigen Phase nicht mehr als 30 ppm beträgt.

Dem Fachmann ist Klar, daß durch die beschriebene Lehre zur Optimierung der Phosgenausbeute, Phasentrennung und des verbesserten Diphenol-Umsatzes in einer Produktionsanlage durchaus Restwasserwerte unter 0,1 %, Diphenol-Restgehalte unter 10 ppm Diphenol und Phosgenüberschüsse von nicht mehr als 10 Mol-% realisiert werden können.

Die nach dem erfindungsgemäßen Verfahren erhältlichen thermoplastischen Polycarbonate haben Molekulargewichte M̅_{w} (Gewichtsmittel, ermittelt durch Gelpermeationschromatographie) von 15 000 bis 200 000 g/Mol. Sie können wie die konventionell hergestellten thermoplastischen Polycarbonate aus der organischen Phase isoliert und aufgearbeitet werden.

Sie können auf den bekannten Maschinen nach üblichen Methoden zu den bekannten Formkörpern verarbeitet werden, gegebenenfalls nach Zusatz der üblichen Additive oder Stabilisatoren.

Die erfindungsgemäß erhältlichen Polycarbonate sind in bekannter Weise technischen brauchbar, beispielsweise als Elektroisolierfolien oder als Schutzscheiben sowie als Komponente zur Herstellung von Polymermischungen.

### Erfindungsgemäßes Beispiel 1:

Im Verfahrensschritt 1 werden folgende Stoffe eingesetzt:
118,1 kg/h 15 Gew.-% Diphenol-Lösung, die als Diphenol 2,2'-bis-(4-hydroxyphenyl)-propan (Bisphenol-A) und 2 Mol Natronlauge pro Mol Diphenol enthält und bei 25°C unter Normaldruck vorliegt.
10,7 kg/h Phosgen (40 Mol-% Überschuß)
113,0 kg/h Lösungsmittelgemisch aus 50 Gew.-% Methylenchlorid und Monochlorbenzol.

Im Verfahrensschritt 3 werden folgende Stoffe zusätzlich eingesetzt:
30,0 kg/h Diphenol-Lösung der bereits oben angegebenen Zusammensetzung
3,0 kg/h Kettenabbrecher-Lösung, bestehend aus 7,8 Gew.-% Phenol im oben genannten Lösungsmittelgemisch. Es wurde soviel Natronlauge zudosiert, daß eine Alkalikonzentration von 0,2 Gew.-% in der wäßrigen Phase vorliegt.

Im Verfahrensschritt 4 werden folgende Stoffe zusätzlich eingesetzt:
6,0 kg/h Katalysatorlösung, bestehend aus 1,4 Gew.-% N-Ethyl-Piperidin und 98,6 Gew.-Wasser. Es wurde soviel Natronlauge zudosiert, daß eine Alkalikonzentration von 0,2 Gew.-% in der wäßrigen Phase vorliegt.

Als Apparate wurden für die einzelnen Verfahrensschritte verwendet:
- Verfahrensschritt 1:-: Eine Ringlochdüse, in welcher die wäßrige Phase durch die Radiallöcher mit der organischen Lösung im Kern der Düsen zusammengeführt wird.
- Verfahrensschritt 2:-: Ein Strömungsrohr, Durchmesser ca. 25 mm, mit einer Länge von etwa 1 m
- Verfahrensschritt 3:-: Ein Umpumpreaktor, ausgestattet mit einem T-Stück, in welchem das o.g. Strömungsrohr mündet, einer Pumpe, einem Wärmetauscher, einem Überlaufbehälter und einer T-förmigen Entnähmestelle mit einem Gesamtvolumen von etwa 45 l.
- Ein Schlangenrohrreaktor mit Misch- und Verweilzonen und einem Gesamtvolumen von etwa 30 l, der mit der Entnahmestelle des Umpumpreaktors über eine Rohrleitung und Pumpe verbunden ist.
- Verfahrensschritt 4:-: Ein weiterer Schlangenrohrreaktor gleicher Kapazität wie der in Verfahrensschritt 3 beschriebene.
- Verfahrensschritt 5:-: Trenngefäß mit einem Gesamtvolumen von etwa 150 l und einer Trennfläche von etwa 1,6 qm.

### Beschreibung des Versuchs:

Zu Beginn der Reaktion liegen alle Einsatzstoffe bei etwa 25°C vor. Im Umpumpreaktor befindet sich ein Wärmetauscher, der die bis dahin gebildete Reaktionswärme auf ein Temperaturniveau um 30°C abführt. Alle nachfolgenden Reaktionsapparate führen Wärme nur über die Apparateoberfläche ab. Der Versuch wurde bei Umgebungstemperaturen um 20°C durchgeführt.

Kontinuierlich werden in einer Ringlochdüse die wäßrige und organische Phase vermischt und - ohne Abfuhr von Wärme - in den Umpumpreaktor gleitet. In der Mischdüse und im Strömungsrohr liegt eine Wasser-in-Öl-Emulsion vor. Im Umpumpreaktor wird zu Beginn des Konti-Verfahrens Wasser vorgelegt. Vor der Pumpe (in Strömungsrichtung) wird Natronlauge und die Kettenabbrecher-Lösung in der oben beschriebenen Weise nachdosiert. Nach dem Umpumpreaktor wird vor der Pumpe zum Schlangenrohrreaktor die Bisphenol-Lösung nachdosiert. Anschließend (nach dem ersten Schlangerohrreaktor und vor dem zweiten) wird Katalysatorlösung und weitere Natronlauge vor der Pumpe eindosiert und die organische und wäßrige Phase nach Trennung im Trenngefäß untersucht.

### Ergebnis:

| | |
|---|---|
| Restwassergehalt nach 15 Minuten Absetzzeit: | 0,9 Gew.-% |
| Bisphenol-A-Restgehalt in der wäßrige Phase: | <20 ppm |
| Netto-Phosgenüberschuß: | 10,8 Mol-% |

### Vergleichsbeispiel 1

In der gleichen Apparaturvorrichtung wird direkt im Verfahrensschritt 1 die gesamte Menge an Bisphenol (148,1 kg/h) mit Phosgen, dem Lösungsmittelgemisch zusammengeführt. Eine Nachdosierung des Bisphenols erfolgte nicht. Im Umpumpreaktor stellte sich eine Wasser-in-Öl-Emulsion ein. Die Alkalikonzentration wurde ebenfalls aus 0,2 Gew.-% eingestellt. Die Emulsionsversion wurde erst nach Dosierung des Katalysators festgestellt.

### Ergebnis:

| | |
|---|---|
| Restwassergehalt nach 15 Minuten Absetzzeit: | 12 Gew.-% |
| Bisphenol-A-Restgehalt in der wäßrigen Phase: | <20 ppm |
| Netto-Phosgenüberschuß: | 10,8 Mol-% |

### Vergleichsbeispiel 2

Es wird unter Ausschluß des ersten Schlangenrohrreaktors ansonsten die gleiche Versuchsanordnung wie im erfindungsgemäßen Beispiel verwendet. Eine Nachdosierung von Bisphenol entfällt. Diese Bisphenol-Menge wird auch nicht zu Beginn des Verfahrens eingesetzt. Ansonsten wird wie in Vergleichsbeispiel 1 gefahren.

### Ergebnis:

| | |
|---|---|
| Restwassergehalt nach 15 Minuten Absetzzeit: | 1,1 Gew.-% |
| Bisphenol-A-Restgehalt in der wäßrigen Phase: | <20 ppm |
| Netto-Phosgenüberschuß: | 40 Mol-% |

### Vergleichsbeispiel 3

Es werden anstelle der Mischdüse und des Strömungsrohrs die wäßrige und die organische Phase im Seitenstrom über ein Mischkreuz in den Umpumpreaktor gefahren. Eine Nachdosierung der Bisphenol-Lösung erfolgt nicht. Die Nachdosiermenge wird ebenfalls im Mischkreuz dem Umpumpreaktor zugegeben. Der erste Schlangenrohrreaktor entfällt.

### Ergebnis:

| | |
|---|---|
| Restwassergehalt nach 15 Minuten Absetzzeit: | 14 Gew.-% |
| Bisphenol-A-Restgehalt in der wäßrige Phase: | 300 ppm |
| Netto-Phosgenüberschuß: | 10,8 Mol-% |

### Vergleichsbeispiel 4:

Es wird wie in Vergleichsbeispiel 3, jedoch mit einem Phosgenüberschuß von 40 Mol-%, gefahren:

### Ergebnis:

| | |
|---|---|
| Restwassergehalt nach 15 Minuten Absetzzeit: | 7 Gew.-% |
| Bisphenol-A-Restgehalt in der wäßrigen Phase: | 80 ppm |
| Netto-Phosgenüberschuß: | 40 Mol-% |

## Patentansprüche

1. Verfahren zur kontinuierlichen Herstellung von Polycarbonaten mit M̅_{w} (Gewichtsmittel, ermittelt durch Gelpermeationschromatographie) von 15 000 bis 200 000 g/Mol nach der Methode des Zweiphasengrenzflächenverfahrens aus
a) Diphenolen,
b) Phosgen,
c) Katalysatoren,
d) gegebenenfalls Kettenabbrechern und gegebenenfalls
e) Verzweigern,
in einem Gemisch aus wäßrig-alkalischer Phase und organischer Lösungsmittelphase, indem man
1. kontinuierlich die organische Phase und die wäßrige Phase in einem Rohr unter Verwendung eines Mischers zusammenführt,
1.1 wobei die organische Phase für das Polycarbonat geeignetes Lösungsmittel ist und bereits das Phosgen enthält,
1.2 wobei die wäßrige Phase aus Wasser und einem Gemisch von Alkalilauge und phenolischen Komponenten besteht, wobei zwischen 1,5 Mol und 2.1 Mol Alkalilauge pro Mol Diphenol zugesetzt wird,
1.3 wobei die Phasenverhältnisse organische Phase/wäßrige Phase so eingestellt sind, daß sich bei der Phosgenreaktion eine Wasser-in-Öl-Emulsion im Verhältnis (Volumenprozent) organische Phase in wäßriger Phase zwischen 0,50 : 0,50 und 0,70 : 0,30 bildet, wobei insbesondere der Phosgenüberschuß, bezogen auf Mole Diphenole der Stufe 1, mindestens 20 Mol-% beträgt,
2. die Verweilzeit mindestens 3 Sekunden im Strömungsrohr ist,
3. anschließend eine Nachdosierung von wäßriger Phase, bestehend aus phenolischen Komponenten, Wasser und Alkalilauge in solchen Mengen und derart erfolgt, daß die Diphenol-Konzentration der wäßrigen Phase, Dosierkapazität und Dosieranordnung die folgenden Randbedingungen erfüllen, nämlich
a) den ursprünglich kalkulierten Phosgenüberschuß, bezogen auf Mole insgesamt eingesetzte Diphenole (Maßnahme 1 + Maßnahme 3), auf weniger als 15 Mol-% reduziert,
b) die zunächst Wasser-in-Öl-Emulsion in eine Öl-in-Wasser-Emulsion im Verhältnis (Volumenprozent) organische Phase zu wäßriger Phase zwischen 0,45 : 0,55 und 0,48 : 0,52 umschlägt, und
c) die Diphenol-Nachdosierung innerhalb eines Zeitraumes erfolgt, der zwischen sofort nach der Verweilzeit im Strömungsrohr von Verfahrensabschnitt 2 und bis zu 20 Minuten nach Beginn der Phosgenierung liegt,
4. nach im wesentlichen vollständiger Abreaktion des nachdosierten Diphenols Katalysatoren zudosiert und
5. danach die organische Phase abtrennt und in bekannter Weise wäscht und aufarbeitet.

2. Verfahren gemäß Anspruch 1, in dem im Verfahrensschritt 3a) der Phosgenüberschuß auf 6 bis 10,8 Mol-% reduziert wird.

## Claims

1. Process for the continuous preparation of polycarbonates having M_{w} (weight average, determined by gel permeation chromatography) of from 15,000 to 200,000 g/mol by means of the two-phase interface process from
a) diphenols,
b) phosgene,
c) catalysts,
d) optionally chain stoppers and optionally
e) branching agents,
in a mixture comprising an aqueous-alkaline phase and an organic solvent phase,
wherein
1. the organic phase and the aqueous phase are continuously brought together in a tube, using a mixer,
1.1 the organic phase is a suitable solvent for the polycarbonate and already contains the phosgene,
1.2 the aqueous phase consists of water and a mixture of lye and phenolic components, with between 1.5 mol and 2.1 mol of lye being added per mol of diphenol,
1.3 the phase ratios of organic phase/aqueous phase are adjusted so that during the phosgene reaction a water-in-oil emulsion is formed in the ratio (per cent by volume) of organic phase in aqueous phase of between 0.50:0.50 and 0.70:0.30, while in particular the phosgene excess, referred to moles of diphenol of step 1, is at least 20 mol-%,
2. the residence time in the flow tube is at least 3 seconds,
3. subsequently more of the aqueous phase, consisting of phenolic components, water and lye, is added in such quantities and in such a manner that the diphenol concentration of the aqueous phase, the dosing capacity and dosing arrangement fulfil the following limiting conditions, namely
a) the originally calculated phosgene excess, referred to moles of diphenols used in total (step 1 + step 3), is reduced to less than 15 mol-%,
b) the water-in-oil emulsion at first in the ratio (per cent by volume) of organic phase in aqueous phase of between 0.50:0.50 and 0.70:0.30 is changed into an oil-in-water emulsion in the ratio (per cent by volume) of organic phase to aqueous phase of between 0.45:0.55 and 0.48:0.52, and
c) the subsequent addition of diphenol takes place within a period from immediately after the residence time in the flow tube in step 2 of the procedure up to 20 minutes after the onset of phosgenation,
4. after the reaction of the subsequently added diphenol is essentially complete, catalysts are added and
5. the organic phase is then separated off and washed and worked up in a known manner.

2. Process according to claim 1, wherein in the procedural step 3a) the phosgene excess is reduced from 6 to 10.8 mol-%.

## Revendications

1. Procédé pour préparer en continu des polycarbonates de M̅_{w} (poids moyen établi par chromatographie par filtration sur gel) de 15 000 à 200 000 g/mol selon la méthode du procédé des interfaces diphasiques à partir:
a) de diphénols,
b) de phosgène,
c) de catalyseurs,
d) éventuellement, d'agents de rupture de chaîne et éventuellement,
e) d'agents de ramification,
dans un mélange d'une phase aqueuse alcaline et d'une phase de solvant organique,
en
1. mélangeant en continu la phase organique et la phase aqueuse dans un tube au moyen d'un mélangeur,
1.1 la phase organique consistant en un solvant approprié au polycarbonate et contenant déjà le phosgène,
1.2 la phase aqueuse se composant d'eau et d'un mélange de lessive de soude et de composés phénoliques, de 1,5 à 2,1 moles de lessive de soude étant ajoutées par mole de diphénol,
1.3 les rapports phase organique/phase aqueuse étant définis de sorte qu'une émulsion eau dans huile de rapport (pourcent volumétrique) phase organique:phase aqueuse compris entre 0,50:0,50 et 0,70:0,30 se forme lors de la réaction du phosgène, le reste de phosgène, rapporté aux moles de diphénol de l'étape 1, se montant en particulier au moins à 20 % en mole,
2. le temps de séjour dans le tube d'écoulement étant d'au moins 3 secondes,
3. un redosage de la phase aqueuse, consistant en composés phénoliques, eau et lessive alcaline, étant ensuite effectué dans des quantités et d'une façon telles que la concentration en diphénol de la phase aqueuse, la capacité de dosage et la configuration de dosage remplissent les conditions additionnelles suivantes, en l'occurrence:
a) que le reste de phosgène initialement calculé et rapporté aux moles des diphénols utilisés au total (mesure 1 + mesure 3) soit ramené à moins de 15 % en mole,
b) que l'émulsion initialement eau dans huile se transforme en une émulsion huile dans eau de rapport (pourcent volumétrique) phase organique sur phase aqueuse compris entre 0,45:0,55 et 0,48:0,52, et
c) que le redosage du diphénol soit réalisé dans un laps de temps compris entre le moment suivant directement le temps de séjour dans le tube d'écoulement de l'étape 2 du procédé et au plus 20 minutes après le début de la phosgénation,
4. des catalyseurs étant ajoutés dans des quantités dosées après que le diphénol redosé a en grande partie achevé de réagir, et
5. la phase organique étant ensuite séparée, lavée d'une manière connue et retraitée.

2. Procédé selon la revendication 1 dans lequel à l'étape 3.a., le reste de phosgène est ramené entre 6 et 10,0 % en mole.
